# EUROPEAN PATENT APPLICATION

(11) **EP 3 473 695 A1**
(43) Date of publication of application: **24.04.2019**
(21) Application number: 17814918.3
(22) Date of filing: 12.01.2017
(51) Int. Cl.: C10M 141/10, C10M 101/02, C10M 105/32, C10M 107/34, C10M 133/16, C10M 137/04, F16F 9/32, C10N 30/00, C10N 30/06, C10N 40/06, C10N 40/08

(54) **HYDRAULIC FLUID**

(30) Priority: 21.06.2016 JP 2016122339
(71) Applicant: KYB Corporation, Tokyo 105-6111 (JP)
(72) Inventor: ITO, Yoshihiro, Tokyo 105-6111 (JP); KATO, Shinji, Tokyo 105-6111 (JP); YOSHIDA, Shou, Tokyo 105-6111 (JP)
(74) Representative: TBK
(86) International application number: PCT/JP2017/000820
(87) International publication number: WO 2017/221446

(57) **Abstract**

Provided herein is a low-friction lubricant oil. The lubricant oil comprising a base oil, an alkoxylated phosphate ester of an aliphatic alcohol, and a non-alkoxylated phosphate ester of an aliphatic alcohol. The lubricant oil is particularly useful as hydraulic oil for shock absorbers of automobiles.

## Description

### Technical Field

The present invention relates to lubricant oils, hydraulic oils, and shock absorbers using these oils, specifically a phosphate ester-containing lubricant oil or hydraulic oil having a greatly reduced coefficient of friction. A lubricant oil of the present invention is preferred as the hydraulic oil for automobiles, particularly for shock absorbers of two-wheel vehicles and four-wheel vehicles.

### Background Art

Industrial lubricant oil compositions are typically required to have desirable friction characteristics. Imparting low friction to the lubricant oil is practical to get efficient reduction of frictional losses in mechanical devices and to get high energy efficiency and high performances. For example, hydraulic devices are used in a range of machinery. When the lubricant oil having a high coefficient of friction is used as the hydraulic oil it may cause a microscopic stick-slip phenomenon at the sliding portion of a reciprocating gasket of a hydraulic cylinder. This may cause the cylinder to chatter, or cause other phenomena such as vibrations, squeaking sound, and abnormal noise, which may lead to failures to precisely control the hydraulic device. The low-friction lubricant oil is therefore needed for precise and smooth movement of the hydraulic cylinder.

The suspension on the chassis of automobiles uses hydraulic shock absorbers to absorb vibrations. Typically, the shock absorbers have a cylindrical structure, and use the fluid resistance of oil. The hydraulic piston of the shock absorber typically has small orifices, and the resistance of the oil that passes through the orifices in response to the vertical movement of the piston is proportional to the piston speed. A guide bush is therefore installed at the sliding portion of the cylinder and the piston rod to prevent wear, and the whole is sealed to prevent oil leakage. Friction occurs in different parts of a shock absorber in a combined fashion, such as between the piston rod and the guide bush, between the piston rod and the sealant, and between the piston and the cylinder. In the case of automobiles, the shock absorbers are required to provide good ride and control stability by reducing the external vibrations caused under severe driving conditions. The hydraulic oils used for shock absorbers thus need to have low friction, in addition to having antiwear properties for durability. In automobiles, shock absorbers are also used for other parts of automobiles, including the supporting mechanism of the engine, shock absorbers for bumpers, and door closers. Hydraulic shock absorbers are also installed in aircrafts, machine tools, cranes, railway cars, and other applications to absorb shock. Indeed, there is a great challenge remaining in improving hydraulic oils.

A number of techniques are proposed that add small amounts of additives to a base oil to reduce the friction of lubricant oils and hydraulic oils.

For example, Patent Literature 1 proposes hydraulic oil compositions having desirable antiwear properties and a low coefficient of friction, specifically a hydraulic oil composition containing a base oil, and 0.1 to 5.0 weight% of zinc dialkyldithiophosphate having an alkyl group of 10 to 25 carbon atoms, and a hydraulic oil composition containing 0.1 to 3.0 weight% of a phosphate ester amine.

Other examples improve practicality of lubricant oil or hydraulic oil by imparting an anticorrosion or antirusting property against metallic materials. For example, lubricant oils containing acid ester additives are proposed in Patent Literatures 2 and 3. Patent Literature 2 proposes a hydraulic oil composition having a greatly reduced coefficient of friction, and low copper solubility, specifically a hydraulic oil composition containing (a) 0.3 to 1.5 weight% of zinc dialkyldithiophosphate having an alkyl group of 3 to 8 carbon atoms, (b) 0.1 to 1.5 weight% of a glycerine partially aliphatic acid ester, and (c) 0.1 to 1.0 weight% of a succinic acid ester in a mineral oil with respect to the total composition amount.

Patent literature 3 proposes a lubricant oil composition that greatly reduces wear, and stably shows a low coefficient of friction, and that has a high antirusting property for the lubrication of iron-based sliding portions, specifically a lubricant oil composition produced by adding 0.01 to 10 mass% of a 3,4,5-trihydroxybenzoic acid ester, and 0.1 to 20 mass% of a cleaning dispersant to a lubricant base oil with respect to the total amount of the lubricant oil composition.

As other examples use organic nitrogen compounds, for example, Patent Literature 4 proposes a hydraulic oil composition for shock absorbers having desirable antiwear properties and desirable friction characteristics (low coefficient of friction), and the ability to desirably prevent corrosion and dissolution of metallic materials such as copper and iron, specifically a hydraulic oil composition for shock absorbers containing (A) 0.01 to 2.0 weight% of benzotriazole or derivatives thereof, and (B) 0.001 to 2.0 weight% of a thiadiazole derivative in a lubricant base oil with respect to the total weight of the composition, and in which the mixture ratio [(A)/(B)] of components (A) and (B) ranges from 2.5 to 10 (weight ratio). Patent Literature 5 proposes a preferable lubricant oil composition for industrial and automobile applications having an excellent antirusting property, and high low-frictional energy efficiency, specifically a lubricant oil composition containing an aspartic acid derivative, and an aliphatic amine compound and/or an aliphatic amide compound in a highly refined base oil or a synthetic base oil, and that is preferred for use as an industrial or automobile lubricant oil, such as a hydraulic oil for hydraulic devices.

### Citation List

### Patent Literature

Patent Literature 1: JP-A-05-255682
Patent Literature 2: JP-A-06-145684
Patent Literature 3: WO2010/79744
Patent Literature 4: JP-A-11-29783
Patent Literature 5: JP-A-2008-214618
Patent Literature 6: US Patent No. 6,117,915

### Summary of Invention

### Technical Problem

In order to provide good ride quality and control stability by reducing vibrations caused in automobiles under severe driving conditions, the hydraulic oils used for shock absorbers are required to have desirable antiwear properties for durability, and a low coefficient of friction for improved ride quality. However, it has been difficult to obtain hydraulic oil having a sufficiently low coefficient of friction. The conventional low-friction lubricant oils have a coefficient of friction of about 0.02.

A variety of friction modifiers are used to control the friction of lubricant oils. However, the formulation of low friction heavily relies on the experiences and the detail mechanisms were still unknown.

An object of the present invention is to provide a lubricant oil and a hydraulic oil having a greatly reduced coefficient of friction, particularly to provide a hydraulic oil for shock absorbers of automobiles.

### Solution to Problem

The present invention relates to a lubricant oil and a hydraulic oil having a greatly reduced coefficient of friction. The lubricant oil or hydraulic oil of the present invention is useful as a hydraulic oil for shock absorbers of automobiles.

The conventional low-friction lubricant oils have a coefficient of friction of about 0.02. The present invention enables to prove hydraulic oils having a coefficient of friction of about 0.01 or less. At the same time the hydraulic oil sufficiently satisfies the required performance, and can improve ride quality when used as a hydraulic oil for shock absorbers of automobiles.

A variety of friction modifiers are used to control the friction of a lubricant oil. However, the formulation of low friction heavily relies on experiences, and much of the details were unknown. The present inventors have made it possible to provide a low-friction lubricant oil based upon a novel formulation of additives combining substances that have not been used as friction modifiers.

The gist of the present invention lies in a lubricant oil that contains a base oil, an alkoxylated phosphate ester of an aliphatic alcohol, and a non-alkoxylated phosphate ester of an aliphatic alcohol.

The alkoxylated phosphate ester of an aliphatic alcohol is preferably a phosphate ester containing an aliphatic alcohol having a C12 to C24 chain length, and an alkoxy group comprised of ethylene oxide, propylene oxide, or a mixture thereof, the alkoxy group being contained in 1 to 20 moles per a mole of the aliphatic alcohol, and The non-alkoxylated phosphate ester of an aliphatic alcohol is preferably an ester containing an aliphatic alcohol having a C12 to C24 chain length.

The lubricant oil of the present invention may provide, regardless of the type of base oil, a low-friction lubricant oil containing the base oil at least selected from a paraffin base oil, a naphthene base oil, an ester base oil, and a polyalkylene glycol base oil.

### Brief Description of Drawings

FIG. 1 represents the relationship between the added amounts of the friction modifier of the present invention and coefficient of friction values as Test Examples 1 to 5, and the relationship between the type of the base oil of the lubricant oil and coefficient of friction values as Test Examples 7 to 9.
Fig.2 represents the results of tests of an automobile furnished the shock absorbers using the lubricant oil of the present invention.

### [Description of Embodiments]

The present invention relates to a lubricant oil containing a base oil, an alkoxylated phosphate ester of an aliphatic alcohol, and a non-alkoxylated phosphate ester of an aliphatic alcohol. The lubricant oil has properties that are particularly preferable as a lubricant oil.

Preferably, the alkoxylated phosphate ester of an aliphatic alcohol is an ester containing an aliphatic alcohol having a C12 to C24 chain length, and an alkoxy group comprised of ethylene oxide, propylene oxide, or a mixture of these, wherein the alkoxy group is contained in 1 to 20 moles per a mole of the aliphatic alcohol (hereinafter, "alkoxylated phosphate ester of an aliphatic alcohol" is also referred to as "alkoxyphosphate ester (a)").

Preferably, the non-alkoxylated phosphate ester of an aliphatic alcohol is an ester containing an aliphatic alcohol having a C12 to C24 chain length (hereinafter, "non-alkoxylated phosphate ester of an aliphatic alcohol" is also referred to as "phosphate ester (b)").

The low-friction lubricant oil of the present invention, and a hydraulic oil comprised of the lubricant oil are useful as hydraulic oils used for shock absorbers of four-wheel vehicles and two-wheel vehicles.

When measuring a coefficient of friction of the conventional lubricant oils under of the condition of 0.06 mm/s, a coefficient of friction of some low-friction oil shows 0.018, and a coefficient of friction of some high-friction oil shows 0.062. The present invention is intended to provide a lubricant oil having a lower coefficient of friction than conventional low-friction lubricant oils, and provides a lubricant oil having a coefficient of friction of about 0.01 or less, regardless of the type of base oil.
Table 1 shows the measured coefficient of friction values of lubricant oils using different base oils. The lubricant oils containing the friction modifier of the present invention showed low coefficient of friction values, regardless of whether the base oil was a paraffin GI, paraffin GIII, naphthene-based, ester-based, or polyglycol-based base oil.

**[Table 1]**

| Main component of base oil | Paraffin GI | Paraffin GIII | Naphthene | Ester | PAG |
|---|---|---|---|---|---|
| Coefficient of friction | 0.008 | 0.009 | 0.006 | 0.007 | 0.009 |

The lubricant oil of the present invention has a coefficient of friction of about 0.01 or less after adding 0.01 to 5.0 weight% of the alkoxyphosphate ester (a) and the phosphate ester (b), though the value may vary with the total content of these phosphates. Table 2 shows an example of the relationship between coefficient of friction and the added amounts of the friction modifier with respect to paraffin GI base oil. Table 3 shows the measured coefficient of friction values of existing lubricant oils available under the names low-friction oil and high-friction oil. The low-friction lubricant oil of the present invention shows a much lower coefficient of friction than the existing low-friction oil.

**[Table 2]**

| | | | | | |
|---|---|---|---|---|---|
| Amount added | 0% | 0.30% | 0.70% | 1% | 1,50% |
| Coefficient of friction | 0.023 | 0.012 | 0.008 | 0.008 | 0.01 |

**[Table 3]**

| Existing oils | | |
|---|---|---|
| | Low-friction oil | High-friction oil |
| Coefficient of friction | 0.018 | 0.062 |

It is required that the alkoxyphosphate ester (a) and the phosphate ester (b) of the present invention be both present in the base oil, preferably in proportions of 20 to 90 weight parts for the alkoxyphosphate ester (a), and 80 to 10 weight parts for the phosphate ester (b). More preferably, the proportion of the alkoxyphosphate ester (a) is 40 to 80 weight parts and the proportion of the phosphate ester (b) is 60 to 20 weight parts. It is further preferable that the alkoxylated phosphate ester content do not exceed about 70 wt% of the total phosphate ester amount.

Preferably, the alkoxyphosphate ester (a) and the phosphate ester (b) are contained in a total of 0.01 to 5.0 weight%, further preferably 0.5 to 2.0 weight% of the base oil. When the total amount of the phosphate esters in the base oil is below these lower limits, the coefficient of friction does not lower sufficiently. A total amount above the foregoing upper limits is not preferable because it saturates the lowering of coefficient of friction, and is uneconomical.

The both phosphate esters (a) and (b) of the present invention are made from a phosphate group, and a aliphatic alcohol having a C12 to C24 chain length. Preferably, the both phosphate esters are made from a phosphate group and a aliphatic alcohol having a C12 to C24 chain length, and the aliphatic alcohol having a C12 to C24 chain length may be saturated or unsaturated, linear or branched, and/or substituted or unsubstituted. The phosphate esters may be monoesters, diesters, or triesters.

Specific examples of the combinations of the phosphate esters (a) and (b) of the present invention include are:
Polyethyleneglycol-5-oleylphosphate ester and oleylphosphate ester,
Polyethyleneglycol-10-isostearylphosphate ester and isostearylphosphate ester,
Polyethyleneglycol-20-cetethphosphate ester and cetylphosphate ester.

### [Production of the Phosphate Ester Mixture]

The mixture of the alkoxylated phosphate ester and the non-alkoxylated phosphate ester is produced, for example, as described in Patent Literature 6.

### Production of the Lauryl Phosphate Ester

131.6 g (3.0 moles) of lauryl alcohol is charged into a 2000-mL four-neck round-bottom flask. The material is heated to 65°C, and 236 g (1.0 mole) of phosphorus pentoxide (P₂O₅) is added while stirring the mixture. The mixture is allowed to react for 4 hours. Upon cooling, the final product is collected as a lauryl phosphate ester having an acid number of 234 mg KOH, and containing 50.1% diester, and 39.8% monoester.

### Production of the PEG-5 Behenyl Phosphate Ester

For the production of alkoxylated phosphate esters using 5 moles of ethylene oxide per a mole of behenyl alcohol, for example, ethylene oxide is added and bubbled into the 596.8 g of behenyl alcohol in the presence of a potassium hydroxide catalyst until 5 moles of ethylene oxide per a mole of behenyl alcohol are added. An grayish white solid (PEG-5 behenyl alcohol ether) is the main product. The four-necked flask is filled with 920.26 g (3.0 moles) of PEG-5 behenyl ether and the material is heated to 65 °, then 78.9 g of P₂O₅ is added while stirring. The reaction mixture is stirred for 4 hours. The final product is collected as a PEG-5 behenyl phosphate having an acid number of 126.5 mg of KOH, and containing 61% diester, and 37.4% monoester.

60 weight% of PEG-5 behenyl phosphate ester and 40 weight% of lauryl phosphate ester are mixed and heated to 70 ° C and 30 minutes elapse to obtain a mixture emulsified.

### [Alkoxylated Phosphate Ester of Aliphatic Alcohol (Alkoxyphosphate Ester (a))]

The alkoxylated phosphate ester may have any monoester/diester ratio. Preferably, at least about 10 wt% is a monoalkoxylated phosphate ester, and the remainder is a diphosphate ester. Further preferably, the alkoxylated phosphate ester contains at least about 40 wt% of diphosphate ester, more preferably at least 50 weight% of diphosphate ester (specifically, the alkoxylated phosphate ester is predominantly a diphosphate ester). The alkoxylated phosphate ester (a) preferably contains 1 to 20 alkoxy groups in one molecule, more preferably 1 to 10 alkoxy groups.

Particularly preferred examples of the alkoxylated phosphate ester in the present invention include polyethyleneglycol-10 cetyl alcohol, polyethyleneglycol-5 oleylphosphate ester, polyethyleneglycol-10 isostearylphosphate ester, polyethyleneglycol-5 behenylphosphate ester, oleth-3 phosphate ester, oleth-10 phosphate ester, polyplopylene glycol-5-ceteth-10 phosphate ester, dilaureth-4 phosphate ester, triceteareth-4 phosphate ester, and trioleth-8 phosphate ester.

### [Non-Alkoxylated Phosphate Ester of Aliphatic Alcohol (Phosphate Ester (b))]

The non-alkoxylated phosphate ester may be a mixture of any ratio of monophosphate ester and diphosphate ester. Preferably, at least about 40 wt% of the non-alkoxylated aliphatic ester is diphosphate ester. Further preferably, at least about 50 wt% is diphosphate ester. That is, preferably the non-alkoxylated phosphate ester is predominantly a diphosphate ester.

Examples of the non-alkoxylated phosphate ester include dioleylphosphate ester, isostearylphosphate ester, dicetylphosphate ester, linoleic phosphate ester, linolenic phosphate ester, arachidonic phosphate ester, behenic phosphate ester, nervonic phosphate ester, tripalmitic phosphate ester, tristearylphosphate ester, trioleylphosphate ester, stearyl acid phosphate ester, isostearyl acid phosphate ester, oleyl acid phosphate ester, potassium cetylphosphate ester, sodium laurylphosphate ester, and trioleylphosphate ester.

### [Fatty Acid Amide]

The lubricant oil of the present invention may contain various additives, as needed, as long as it is not detrimental to the intended objects of the present invention. Fatty acid amides is especially represented as an additive that is particularly suited for combined use with the lubricant oil of the present invention. The fatty acid amides are preferably monoamides, bisamides, an alkylene polyamide, or polyalkylene polyamides. By being added in 0.01 to 2.0 weight% in the base oil, the fatty acid amide reduces metal corrosion by the phosphate esters. A content below the foregoing lower limit is not preferable as it weakens the antirusting effect. A content above the foregoing upper limit is not preferable as it saturates the effect.

The fatty acid amide is not necessarily required to be a pure compound, and it may contain an acid amide generated by a side reaction when synthesizing a fatty acid amide.

As the fatty acid amide, monoamides, bisamides, N-alkylamides, alkylene polyamides, polyalkylene polyamides and the like are exemplified.

Fatty acids in the amides are preferably selected from saturated or unsaturated fatty acids of C12 to C24. For example, saturated fatty acids are preferably selected from lauric acid, myristic acid, pentadecilic acid, palmitic acid, margaric acid, stearic acid, iso-stearic acid, nonadecyric acid, aradhidic acid, heneicosylic acid or behenic acid.

Unsaturated fatty acids are preferably selected from tsuzuic acid, myristoleic acid, palmitolei acid, zoomaric acid, petroselinic acid, petroselaidic acid, oleic acid, elaidic acid, or nervonic acid.

Amine groups in fatty acid amides are preferably selected from NH2-, saturated or unsaturated fatty acid amines, alkylene polyamines, polyalkylene polyamines.

Ethylene diamine, propylene amine, polyethylene polyamine, polypropylene polyamine, triethylene tetra amine, tetraethylene pentaamine, diethylene triamine, hexsametylene diamine, dipropylene triamine, and tripropylene tetra amine are exemplified.

The fatty amides for the lubricant oil of the preset invention are preferably selected from the following examples. Saturated fatty acid monoamides: myristic acid monoamide, pentadecylic acid monoamide, palmitic acid monoamide, margaric acid monoamide, stearic acid monoamide, iso-stearic acid monoamide, nonadecylic acid monoamide, arachidic acid monoamide, and behenic acid monoamide;

Unsaturated fatty acid monoamides: tsuzuic acid monoamide, myristoleic acid monoamide, palmitoleic acid monoamide, zoomaric acid monoamide, petroselinic acid monoamide, petroselaidic acid monoamide, oleic acid monoamide, and elaidic acid monoamide.

Fatty acid bisamides: ethylene bis-stearic acid amide, ethylene bis-isostearic acid amide, ethylene bis-oleic acid amide, and ethylene bis-erucic acid amide; and

N-Alkyl fatty acid amides: N-methyl myristic acid amide, N-methyl pentadecylic acid amide, N-methyl palmitic acid amide, N-methyl margaric acid amide, N-methyl stearic acid amide, N-methyl nonadecylic acid amide, N-methyl arachidic acid amide, N-methyl behenic acid amide, N-methyl lauroleic acid amide, N-methyl linderic acid amide, N-methyl tsuzuic acid amide, N-methyl myristoleic acid amide, N-methyl palmitoleic acid amide, stearic acid caprylamide, stearic acid stearylamide, stearic acid oleylamide, oleic acid caprylamide, oleic acid stearylamide, and oleic acid oleylamide.

Alkylene polyamide or polyalkylene polyamide are preferably prepared from the reactions between above mentioned fatty acids and the amines such as ethylene diamine, propylene diamine, polyethylene polyamine, polypropylene polyamine, triethylenetetramine, tetraethylenepentamine, diethylenetriamine, hexamethylenediamine, dipropylenetriamine, tripropylenetetramine.

These fatty acid amides may be used alone, or in a combination of two or more. Preferably, the fatty acid amide used in the present invention is contained in a content of 0.01 to 2.0 mass%, further preferably 0.02 to 0.8 mass%, particularly preferably 0.03 to 0.5 mass% with respect to the lubricant oil or hydraulic oil. A sufficient anti-metal corrosion effect cannot be obtained when the content is less than 0.01 mass%. On the other hand, the content above 2.0 mass% may result in poor thermal oxidation stability or storage stability, and the effect may not improve as much as expected from the content. The fatty acid amide content is particularly preferably 0.06 to 1.6 mass% with respect to the total amount of the hydraulic oil composition.

### [Additives]

The hydraulic oil composition of the present invention may contain various known additives, as needed, as long as it is not detrimental to the intended objects of the present invention. Examples of such additives include antioxidants, extreme-pressure agents, antiwear agents, oiliness agents, cleaning dispersants, ashless dispersants, rust inhibitors, metal deactivators, pour-point depressants, and defoaming agents.

Examples of the antioxidants include: monocyclic phenolic antioxidants such as 2,6-di-t-butylphenol, 2,6-di-t-butyl-4-methylphenol, and 2,6-di-t-butyl-4-ethylphenol; bisphenolic antioxidants such as 4,4'-bis(2,6-di-t-butylphenol), 4,4'-methylene bis(2,6-di-t-butylphenol), 4,4'-ethylene bis(2,6-di-t-butylphenol), 4,4'-butylene bis(2,6-di-t-butylphenol), and 6,6'-methylene bis(2-di-t-butyl-4-methylphenol); sulfur-containing phenolic antioxidants such as 4,4'thio bis-(2,6-di-t-butyl-phenol), and 4,4'thio bis-(2-methyl-6-t-butyl-phenol); amine-based antioxidants such as alkylated diphenylamine, and alkylated phenyl-α-naphthylamine; and phosphoric antioxidants such as phosphonic esters.

Examples of the extreme-pressure agents include: sulfur-based extreme-pressure agents such as sulfurized olefins, polysulfides, sulfurized grease, and dithiophosphoric acid derivatives; and organometal-based extreme-pressure agents such as ZnDTP, and ZnDTC. Particularly preferred are sulfurized olefins, and dithiophosphoric acid derivatives, specifically, β-dithiophosphorylated propionic acid.

Examples of the antiwear agents include phosphate esters, phosphite esters, and derivatives thereof. Specific examples of phosphate esters and phosphite esters include tricresyl phosphate, trixylenyl phosphate, cresyldiphenyl phosphate, dicresylphenyl phosphate, tripropyl phosphate, tributyl phosphate, tri(2-ethylhexyl)phosphate, dioctyl phosphate, monooleyl phosphate, dioleyl phosphite, diphenyl phosphite, tricresyl phosphite, and trixylenyl phosphite. Examples of derivatives of these include amine salts, for example, such as stearyl amine salts, oleyl amine salts, and coconut amine salts.

Examples of the oiliness agents include higher alcohols such as oleyl alcohol; amines such as oleyl amine; esters such as butyl stearate; and polyalcohol half esters such as glycerine monooleate.

Examples of the cleaning dispersants include alkali earth metal-based cleaning dispersants. Specific examples include Ca salicylate, Ca phenate, and Ca sulfonate.

Examples of the ashless dispersants include succinimide compounds. Specific examples include polybutenyl-bis-succinimide, and boron modified compounds thereof.

Examples of the rust inhibitors include metal soaps such as sulfonate metal salts, and naphthenic acid metal salts; surfactants such as alkyl succinic acid derivatives, alkenylsuccinic acid derivatives, lanolin compounds, sorbitan monooleate, and pentaerythritol monooleate; waxes and oxidized waxes, petrolatum, N-oleyl sarcosine, rosin amine, alkylated amine compounds such as dodecyl amine, and octadecyl amine; fatty acids such as oleic acid, and stearic acid; and phosphorous compounds such as phosphites. Preferred are alkyl succinic acid derivatives, alkenylsuccinic acid derivatives, surfactants, and alkylated amine compounds. Further preferred are alkyl succinic acid derivatives, and alkenylsuccinic acid derivatives.

Examples of the metal deactivators include benzotriazole and derivatives thereof, indazole and derivatives thereof, benzimidazole and derivatives thereof, indole and derivatives thereof, and thiadiazole and derivatives thereof. Preferred are benzotriazole and derivatives thereof, and thiadiazole and derivatives thereof.

Examples of the pour-point depressants include polyalkyl methacrylates, polybutenes, polyalkyl styrenes, polyvinyl acetates, and polyalkyl acrylates. Preferably, poly(meth)acrylates as pour-point depressants are of low molecular weights, preferably with a weight-average molecular weight of less than 70,000, more preferably 65,000 or less, further preferably 60,000 or less. Poly(meth)acrylates as pour-point depressants have a number average molecular weight of preferably less than 30,000, more preferably 25,000 or less.

Examples of the defoaming agents include silicone-based defoaming agents such as dimethyl silicone, alkyl modified silicone, phenyl modified silicone, and fluorine modified silicone; and polyacrylate-based defoaming agents.

The following describes the coefficient of friction of the lubricant oil of the present invention referring to Examples.

The coefficient of friction was measured by performing a Bowden-Leben reciprocating friction test. A nitrile butadiene rubber test piece, and a test plate surface-plated with chromium were set at the predetermined position of a Bowden-Leben tester, and a sample oil was released between the test ball and the test plate. The test was performed under a load of 20 N, and a slide rate of 0.06 mm/s, and the coefficient of friction was measured.

### Example 1

For specific testing of the lubricant oil of the present invention, the following base oils were prepared: a paraffin base oil, and a naphthene base oil; a synthetic naphthene base oil, and a synthetic ester base oil; and a synthetic polyglycol base oil. The lubricant oils of the present invention were prepared with these base oils, using a polymethacrylate-based viscosity index improver having a molecular weight of 10,000 or more, a dibutylhydroxytoluene-based antioxidant, a benzotriazole-based copper deactivator, a tricresyl phosphate ester-based extreme-pressure agent, a carboxylic acid amide-based dispersant, and an friction modifier prepared as a mixture of an alkoxylated phosphate ester of an aliphatic alcohol, and a non-alkoxylated phosphate ester of an aliphatic alcohol.

The mixes of the lubricant oils of Examples and Comparative Examples are shown in Table 4. Test Examples 2 to 9 represent Examples of the present invention. Test Example 1 is a comparative example in which the friction modifier of the present invention was not incorporated.

**[Table 4]**

| Large classification | Small classification | Names of base oils and additives | 1 | 2 | 3 | 4 | 5 | 6 | 7 | 8 | 9 |
|---|---|---|---|---|---|---|---|---|---|---|---|
| Base oils | Paraffin base oil | GI base oil | Added | Added | Added | Added | Added | | | | |
| | | GIII base oil | | | | | | Added | | | |
| | Naphthene base oil | | | | | | | | Added | | |
| | Synthetic base oil 1: Ester base oil | | | | | | | | | Added | |
| | Synthetic base oil 2: Polyglycol base oil | | | | | | | | | | Added |
| Additives | Viscosity index improver | PMA | Added | Added | Added | Added | Added | Added | Added | | |
| | | | | | | | | | | | |
| | Antioxidant | | 0.30 | 0.30 | 0.30 | 0.30 | 0.30 | 0.30 | 0.30 | 0.30 | 0.30 |
| | Copper deactivator | | 0.03 | 0.03 | 0.03 | 0.03 | 0.03 | 0.03 | 0.03 | 0.03 | 0.03 |
| | Extreme-pressure agent | | 0.30 | 0.30 | 0.30 | 0.30 | 0.30 | 0.30 | 0.30 | 0.30 | 0.30 |
| | Defoaming agent | | 0.10 | 0.10 | 0.10 | 0.10 | 0.10 | 0.10 | 0.10 | 0.10 | 0.10 |
| | Dispersant | | 1.00 | 1.00 | 1.00 | 1.00 | 1.00 | 1.00 | 1.00 | 1.00 | 0.50 |
| | Friction modifier | | 0.00 | 0.30 | 0.70 | 1.00 | 1.50 | 1.00 | 1.00 | 1.00 | 0.50 |

The friction modifier used in Present Examples is a mixture of 55 weight% of PEG-5 oleylphosphate ester representing the alkoxylated phosphate ester of an aliphatic alcohol, and 45 weight% of dioleylphosphate ester representing the non-alkokylated phosphate ester of an aliphatic alcohol (hereinafter, the mixture will also be referred to as "friction modifier ").

**[Table 5]**

| | | Amount added | | | | | Existing oils | |
|---|---|---|---|---|---|---|---|---|
| | | 1 | 2 | 3 | 4 | 5 | Low-friction oil | High-friction oil |
| Base oil | Paraffin base oil GI | Added | Added | Added | Added | Added | N/A | N/A |
| Additive | Amount of friction modifier added (wt%) | 0 | 0.3 | 0.7 | 1 | 1.5 | | |
| Properties of hydraulic oil | Acid number (mgKOH/g) | 0.0 | 0.5 | 1.1 | 1.6 | 2.4 | 1.1 | 1.3 |
| | Phosphate content (ppm) | 270 | 420 | 620 | 770 | 1020 | 1100 | 700 |
| Coefficient of friction (0.06 mm/s) | | 0.023 | 0.012 | 0.008 | 0.008 | 0.010 | 0.018 | 0.062 |

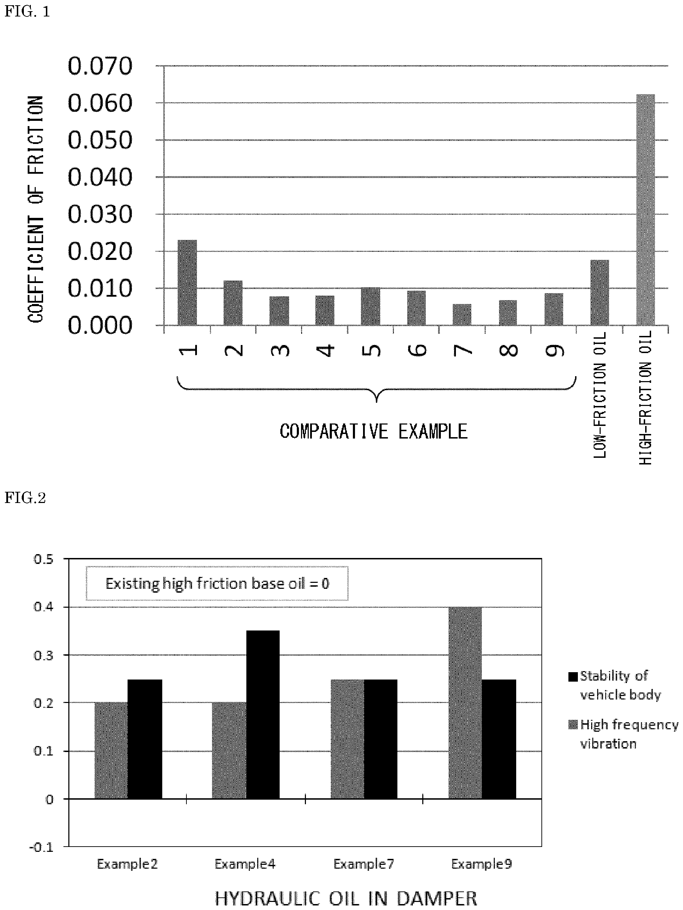

The contents of the friction modifier and the coefficient of friction are related such that the lubricant oil without the friction modifier had a coefficient of friction of 0.023, whereas the coefficient of friction decreased from 0.012 to 0.008 by increasing the friction modifier content from 0.5 wt% to 1.5 wt%. It was demonstrated that the coefficient of friction of the oil of Test Example 1 without the friction modifier, which has larger coefficient of friction of existing low-friction oils, was greatly decreased with the friction modifier of the present invention. FIG. 1 is a simple graphic representation comparing the coefficients of friction of Examples, Comparative Example, and Existing Examples shown in Table 5. As is clear from FIG. 1, the lubricant oils of the present invention have lower coefficients of friction than that of Test Example 1 (Comparative Example) or the existing low-friction oil.

In the test example 1 to 5, the amount of the additives is the same except for the friction modifier, and their coefficient of friction is decrease in accordance of their amount of the friction modifier. This may lead to that the coefficient of friction is influenced by the friction modifier.

For comparison, the coefficients of friction of commercially available low-friction oil and high-friction oil are given under the heading "Existing Oils" shown in Table 5. Details of the base oils and additives of these oils are unknown.

### Example 2

The composition of the base oil of the lubricant oil was examined with regard to its effects on coefficient of friction. A relationship between base oil and coefficient of friction was determined using paraffin base oils GI and GII, a naphthene base oil, and a synthetic ester base oil and a polyglycol base oil. The results are summarized in Table 6. The coefficient of friction was measured for each different base oils with the amount of the friction modifier of the present invention held constant. The lubricant oils of the present invention had coefficients of friction in a range of from 0.006 to 0.009, showing that the friction modifier of the present invention was effective, regardless of the type of the base oil. It was therefore confirmed that the friction modifier of the present invention has versatility.

**[Table6]**

| | | Base oil | | | |
|---|---|---|---|---|---|
| | | 4 | 6 | 7 | 8 |
| Base oil | Paraffin base oil GI | Added | | | |
| | Paraffin base oil GIII | | Added | | |
| | Naphthene base oil | | | Added | |
| | Synthetic oil 1: (synthetic ester base oil) | | | | Added |
| | Synthetic oil 2: (polyglycol base oil) | | | | |
| Additive | Amount of friction modifier added (wt%) | 1 | 1 | 1 | 1 |
| Properties of hydraulic oil | Acid number (mgKOH/g) | 1.6 | 1.5 | 1.5 | 1.7 |
| | Phosphate content (ppm) | 770 | 690 | 720 | 770 |
| Coefficient of friction (0.06 mm/s) | | 0.008 | 0.009 | 0.006 | 0.007 |

### Example 3

A lubricant oil containing 2.0 wt% of a friction modifier having the following composition in GI base oil was prepared and a coefficient of friction of the lubricant oil was measured to obtain a value of 0.01.

70 wt% of alkoxylated phosphate ester of an aliphatic alcohol: polyethyleneglycol-5 behenylphosphate ester containing 61 wt% of diester and 39 wt% of monoester.

30 wt% of non-alkoxylated phosphate ester of an aliphatic alcohol: lauryl phosphate ester containing 50 wt% of diester and 40 wt% of monoester.

### Example 4

A lubricant oil containing 2.5 wt% of a friction modifier having the following composition in GI base oil was prepared and a coefficient of friction of the lubricant oil was measured to obtain a value of 0.09.

60 wt% of alkoxylated phosphate ester of an aliphatic alcohol: polyethyleneglycol-5 behenylphosphate ester containing 75 wt% of diester and 25 wt% of monoester.

40 wt% of non-alkoxylated phosphate ester of an aliphatic alcohol: oleylphosphate ester containing 40 wt% of diester and 60 wt% of monoester.

### Example 5

It was found that the carboxylic acid amide used as the dispersant in above Examples 1 and 2 exhibits excellent effect in the present invention. It was found that the lubricant oils containing the friction modifier of the present invention had strong corrosiveness against metals. Efforts to alleviate this problem revealed that adding a carboxylic acid amide to the present lubricant oil for reducing the corrosiveness.

When a mixture of polyethyleneglycol 5-oleylphosphate ester and dioleyl phosphate ester was used as the friction modifier of the present invention, it was found that these phosphate esters are corrosive to the metal in contact. As a result of examining numerous metal corrosion inhibitors, it was found that carboxylic acid amide is useful for preventing metal corrosion of the lubricant oil containing the present friction modifier. Especially the corrosiveness of the lubricant oils of the present invention to the metal was reduced by adding the carboxylic acid amide from the reaction of iso-stearic acid and tetraethyrenepentamine. It is therefore preferable to add a carboxylic acid amide when using the friction modifier of the present invention.

### Example 6

### [Driving Test Method]

The lubricant oil of the present invention prepared in Example 1 was used as a hydraulic oil for shock absorbers, and its performance as a hydraulic oil was tested in a car. The car had a 3-L turbo-charged engine, and the hydraulic oil in all shock absorbers was replaced with the test hydraulic oil of example 1. For driving evaluation, multiple test drivers were asked to drive a long distance on the order of several tens of kilometers, and evaluate the driving feel in a sensory test. The results of comparing conventional high friction oil and the hydraulic oil of the example 1 are shown in Table 7. The results of the conventional high friction oil were converted 0. And the results of the example 2,4,7,9 were evaluated to giving numerical values in accordance with the improvement degrees. Figure 2 shows this result. It was found that the hydraulic oils with 0.006 to 0.012 of low coefficient of friction improve the stability of the vehicle body and the high frequency vibration, regardless of the type of base oil.

**[Table 7]**

| | | GI base oil | GI base oil | Naphthene base oil | PAG base oil |
|---|---|---|---|---|---|
| | Existing high friction base oil | Example2 | Example4 | Example7 | Example9 |
| Stability of vehicle body | 0 | 0.2 | 0.2 | 0.25 | 0.4 |
| High frequency vibration | 0 | 0.25 | 0.35 | 0.25 | 0.25 |

### [Summary]

As described above the present invention relates to the low-friction lubricant oil comprising a base oil, an alkoxylated phosphate ester of an aliphatic alcohol, and a non-alkoxylated phosphate ester of an aliphatic alcohol.

The present invention achieves the following technical characteristics:
(i) Imparting low friction to the lubricant oil is practical to get efficient reduction of frictional losses in mechanical devices and to get high energy efficiency and high performances. As the result, for example, a microscopic stick-slip phenomenon at the sliding portion of a reciprocating gasket of a hydraulic cylinder, the chatter of cylinder, other phenomena such as vibrations, squeaking sound, and abnormal noise, or failures to precisely control the hydraulic device may be prevented. The low-friction lubricant oil is therefore needed for precise and smooth movement of the hydraulic cylinder.
(ii) The base oil of the present invention can be chosen from any types of base oils, so the lubricant oils can be applied for multiple purposes. The lubricant oils have suppressed a metal corrosion property to be possible to extend the life of the equipment.
(iii) The lubricant oil is useful as a hydraulic oil for shock absorbers, and desirably improves the ride quality of a four-wheel vehicle and a two-wheel vehicle equipped with shock absorbers using the lubricant oil. And the present invention implies following characteristics.

(2) The low-friction lubricant oil according to the item (1),
   wherein the alkoxylated phosphate ester of an aliphatic alcohol is an ester containing an aliphatic alcohol having a C12 to C24 chain length, and an alkoxy group comprised of ethylene oxide, propylene oxide, or a mixture of these, the alkoxy group being contained in 1 to 15 moles per mole of the aliphatic alcohol, and
   wherein the non-alkoxylated phosphate ester of an aliphatic alcohol is an ester containing an aliphatic alcohol having a C12 to C24 chain length.
(3) The low-friction lubricant oil according to the item (1) or (2), wherein the aliphatic alcohol is a saturated or unsaturated aliphatic alcohol.
(4) The low-friction lubricant oil according to any one of the items (1) to (3), wherein the alkoxylated phosphate ester is present in a proportion of 20 to 90 wt% of the total amount of the alkoxylated phosphate ester and the non-alkoxylated phosphate ester, and the non-alkoxylated phosphate ester is present in a proportion of 80 to 10 wt%.
(5) The low-friction lubricant oil according to any one of the items (1) to (4), wherein the alkoxylated phosphate ester of an aliphatic alcohol, and the non-alkoxylated phosphate ester of an aliphatic alcohol are contained in the base oil in a total of 0.1 to 5.0 weight%.
(6) The low-friction lubricant oil according to any one of the items (1) to (5), wherein the base oil is at least one selected from a paraffin base oil, a naphthene base oil, an ester base oil, and a polyalkylene glycol base oil.
(7) The low-friction lubricant oil according to any one of the items (1) to (6), which contains a fatty acid amide having a saturated or unsaturated fatty acid of 12 to 22 carbon atoms.
(8) The low-friction lubricant oil according to the item (7), wherein the fatty acid amide is a monoamide, a bisamide, an alkylene polyamide, or a polyalkylene polyamido.
(9) The low-friction lubricant oil according to the item (7) or (8), wherein the fatty acid amide is contained in the base oil in a content of 0.01 to 2 weight%.
(10) A shock absorber using the hydraulic oil comprising the lubricant oil of any one of the items (1) to (9).

### [Industrial Applicability]

The present invention is useful as a means to impart low friction to industrial lubricant oils, and efficiently reduce the frictional losses of mechanical devices to improve energy efficiency and performance. The lubricant oil with the reduced coefficient of friction is preferred used as a hydraulic oil, particularly in shock absorbers of automobiles, and is suited as a hydraulic oil for shock absorbers of two-wheel vehicles and four-wheel vehicles. The lubricant oil can reduce automobile vibrations under the severe driving conditions of automobiles, and provide good ride quality and control stability.

## Claims

1. A lubricant oil comprising a base oil, an alkoxylated phosphate ester of an aliphatic alcohol, and a non-alkoxylated phosphate ester of an aliphatic alcohol.

2. The lubricant oil according to claim 1,
wherein the alkoxylated phosphate ester of an aliphatic alcohol is an ester containing an aliphatic alcohol having a C12 to C24 chain length, and an alkoxy group comprised of ethylene oxide, propylene oxide, or a mixture of these, the alkoxy group being contained in 1 to 20 moles per a mole of the aliphatic alcohol, and
wherein the non-alkoxylated phosphate ester of an aliphatic alcohol is an ester containing an aliphatic alcohol having a C12 to C22 chain length.

3. The lubricant oil according to claim 1 or 2, wherein the aliphatic alcohol of an alkoxylated phosphate ester of an aliphatic alcohol, and a non-alkoxylated phosphate ester of an aliphatic alcohol is a saturated or unsaturated aliphatic alcohol.

4. The lubricant oil according to claim 1, wherein the alkoxylated phosphate ester is present in a proportion of 20 to 90 wt% of the total amount of the alkoxylated phosphate ester of an aliphatic alcohol and the non-alkoxylated phosphate ester of an aliphatic alcohol, and the non-alkoxylated phosphate ester is present in a proportion of 80 to 10 wt%.

5. The lubricant oil according to claim 1, wherein the alkoxylated phosphate ester of an aliphatic alcohol, and the non-alkoxylated phosphate ester of an aliphatic alcohol are contained in the base oil in a total of 0.01 to 5.0 weight%.

6. The lubricant oil according to claim 1, wherein the base oil is at least one selected from a paraffin base oil, a naphthene base oil, an ester base oil, and a polyalkylene glycol base oil.

7. The lubricant oil according to claim 1, wherein the lubricant oil further contains a fatty acid amide having a saturated or unsaturated fatty acid of 12 to 22 carbon atoms.

8. The lubricant oil according to claim 7, wherein the fatty acid amide is a monoamide, a bisamide, an alkylene polyamide, or a polyalkylene polyamide.

9. The lubricant oil according to claim 7, wherein the fatty acid amide is contained in the base oil in a content of 0.01 to 2 weight%.

10. A shock absorber using the hydraulic oil comprising the lubricant oil of claim 1.
